Europäisches Patentamt

European Patent Office

Office européen des brevets

(19)

(11) Veröffentlichungsnummer: **0 223 990**
**B1**

(12) **EUROPÄISCHE PATENTSCHRIFT**

(45) Veröffentlichungstag der Patentschrift:
15.02.89

(21) Anmeldenummer: **86113941.8**

(22) Anmeldetag: **08.10.86**

(51) Int. Cl.⁴: **A 23 G 3/04,** C 13 G 1/04

(54) Ausziehvorrichtung zur Entnahme einer zuckerhaltigen Masse aus einem unter Vakuum arbeitenden Kochapparat.

(30) Priorität: **18.10.85 IT 2254685**

(43) Veröffentlichungstag der Anmeldung:
**03.06.87 Patentblatt 87/23**

(45) Bekanntmachung des Hinweises auf die Patenterteilung:
**15.02.89 Patentblatt 89/7**

(84) Benannte Vertragsstaaten:
**AT BE CH DE FR GB IT LI LU NL SE**

(56) Entgegenhaltungen:
**BE-A-474 482**
**DE-A-3 221 056**
**DE-B-1 066 407**
**DE-C-212 097**
**DE-C-451 408**
**DE-C-461 165**
**FR-A-1 500 106**

(73) Patentinhaber: **CARLE & MONTANARI S.p.A., Via Neera 39, I-20141 Milano (IT)**

(72) Erfinder: **Bonifacino, Mario, Via A. Gramsci 42, I-15011 Acqui Terme (IT)**

(74) Vertreter: **de Dominicis, Riccardo, de Dominicis & Partners s.a.s. Via Brera, 6, I-20121 Milano (IT)**

## Beschreibung

Die vorliegende Erfindung betrifft eine Ausziehvorrichtung zur Entnahme einer zuckerhaltigen Masse aus einem unter Vakuum arbeitenden Kochapparat.

Diese unter Vakuum arbeitenden Kochapparate werden vor allem zur Herstellung von zuckerhaltigen Massen eingesetzt, die für die Erzeugung von Bonbons bestimmt sind. Je nach der Bonbonsorte kommen selbstverständlich zuckerhaltige Massen mit voneinander abweichenden Zusammensetzungen bzw. Zähigkeiten in Frage. Jedenfalls muss zum Erhalten von haltbaren Bonbons der Wassergehalt der zuckerhaltigen Endmasse auf einem sehr niedrigen Wert gehalten werden was bekannterweise durch eine Unterdruckbehandlung der zuckerhaltigen Masse erreicht wird, deren Entnahme ferner derart vorzugsweise stattfinden soll, dass diese Masse keine Kristallisation erfährt.

Die DE-PS-820 843 und FR-A-1 366 806 zeigen Vorrichtungen zur Behandlung von zuckerhaltigen Massen, die aus einer Zahnradpumpe bestehen, wobei die Zahnräder der in der genannten französischen Patentschrift dargestellten Pumpe heizbar vorgesehen sind.

Solche Vorrichtungen sind zur Entnahme von zuckerhaltigen Massen unter Vakuum deshalb nicht geeignet, weil die mechanischen Beanspruchungen, die auf die zuckerhaltige Masse übertragen werden, zu deren Kristallisation führen. Ausser würde bei den heizbaren Zahnrädern eine nachteilige Haftung der zuckerhaltigen Masse an denselben auftreten, insbesondere im Falle einer Erwärmung bis nahe der Kochtemperatur oder über derselben.

Auch der bekannten, manuellen Entnahme der zuckerhaltigen Masse in Form von Chargen bei Verwendung von Tragblechen haften zahlreiche Nachteile an: u. a. die erforderliche Anwesenheit von mehreren Arbeitern, der konstant einzuhaltende Takt oder Synchronismus zur Entnahme der zuckerhaltigen Masse, die Einführung der Chargen in die Bonbonerzeugungsmaschine, usw.

Ebenfalls bekannt sind Ausziehvorrichtungen mit Förderschnecken (DE-U-1 946 227 und DE-B-2 121 378), bei welchen eine Förderschnecke als Verdrängungselement der zuckerhaltigen Masse vom unter Vakuum arbeitenden Kochapparat bis zur Eingabestelle in die in Strömungsrichtung nachgeschaltete Bonbonerzeugungsmaschine dient. Im genannten DE-U-1 946 227 sind die Förderschnecke und der zugehörige Sitz im Aufnahmegehäuse über ihre totale Länge kegelig gestaltet, während dagegen bei der genannten DE-B-2 121 378 lediglich die Ablaufstrecke der Förderschnecke und diejenige des zugehörigen Sitzes kegelig ausgeführt sind. Dies führt zu einer entsprechend langen Verdrängungsstrecke der zuckerhaltigen Masse, was die Notwendigkeit von spezifischen aufwendigen Massnahmen zur Einhaltung der erforderlichen Temperatur auf dieser Strecke sowie zur Durchführung von besonderen Massnahmen, falls erwünscht, zuckerhaltige Massen mit verschiedener Viskosität zu behandeln, mit sich bringt. Die Druckwirkung zur mechanischen Verdrängung unter Bildung einer wesentlichen Reihung auf einer verhältnismässig langen Strecke kann ferner das Auftreten, von Kristallisierungen in der zuckerhaltigen Masse begünstigen.

Durch die DE-C-1 270 939 ist darüber hinaus eine Abtragvorrichtung für zuckerhaltige Massen bekanntgeworden, die durch ein Paar Abzugsrollen bzw. durch eine einzige Abzugsrolle arbeitet, welche mit Abstreifern arbeiten und die zuckerhaltige Masse durch Haftung derselben an den erwähnten Rollen und deren Mitnahme durch Rotation ausziehen, wobei die Abführung durch die genannten Abstreifer oder eine Zwischenwirkung zwischen den Abzugsrollen auftritt. Eine steuerbare Öffnung am Einrichtungsboden ermöglicht den ersten bzw. anfänglichen Ablauf der Masse durch Schwerkraft auf ein untenliegendes Förderband. Die Wellen der Abzugsrollen sind zur Führung einer Heizflüssigkeit hohl ausgeführt. Die Bauweise dieser Einrichtungen ist ohne weiteres an sich interessant, jedoch sind dieselben an Förderbänder zur Beförderung der entnommenen Masse gebunden, insofern die Entnahme wesentlich durch Schwerkraft stattfinden und diese Einrichtungen deshalb nicht imstande sind, die zuckerhaltige Masse durch Druck einer internen Förderstrecke hindurch bis zur Bonbonherstellungsmaschine weiterzubefördern.

Ein weiterer Nachteil besteht in der Schwierigkeit, die Förderstrecke für die zuckerhaltige Masse zu beheizen, um diese Förderstrecke auf der erwünschten Temperatur zu halten. Ein weiterer Nachteil der bekannten Einrichtungen besteht darin, dass sie eine getrennte, d. h. unabhängige Förderstrecke für die Masse benötigen. Der zwischen den Elementen, die mit der zuckerhaltigen Masse in Berührung kommen, d h. zwischen den Abzugsrollen untereinander und zwischen diesen letzteren und den Abstreifern auftretende Verschleiss, der auf die Abriebwirkung der behandelten Masse zurückzuführen ist, ist als weiterer Nachteil zu betrachten. Diese Abnützungen führen zu längeren Stillstandzeiten, z. B. von mehreren Tagen, der Bonbonerzeugungsanlagen. Dieses wirkt sich als sehr nachteilig aus, wenn man bedenkt dass eine mittlere produktion dieser Anlagen, z. B. 1000 kg/h beträgt.

Der vorliegenden Erfindung liegt die Aufgabe zugrunde, eine Ausziehvorrichtung der erwähnten Bauart zu schaffen, die imstande ist, unter Beibehaltung des in Strömungsrichtung hinten bestehenden Kochapparatunterdrucks einen kontinuierlichen Austrag der entnommenen zuckerhaltigen Masse zu gewährleisten, so wie auch bei zuckerhaltigen Massen mit unterschiedlicher Viskosität eine einwandfreie Entnahme derselben zu erzielen, und dies bei einer einfachen Bauweise, die einen beschränkten Raumbedarf erfordert und in sehr kurzer Zeit ausführbare Wartungs- und/oder Ersetzungseingriffen ermöglicht.

Im Rahmen der oben genannten Aufgabe wird ferner vorgeschlagen, eine Vorrichtung der angegebenen Art zu schaffen, die mit einer äusserst einfachen Heizanlage und einem wirksamen Reinigungskreislauf zur internen Reinigung am Ende der Tagesarbeit versehen ist.

Ausgehend von einer Vorrichtung der eingangs erwähnten Art, d.h. enthaltend ein mit der Auslassöffnung des Unterdruckkochapparates verbindbares Gehäuse, das die Ausziehmittel der zuckerhaltigen Masse aufnimmt und mit einem äusseren mit einer Heizmittelquelle verbundenen Zwischenraum versehen ist, wird die erwähnte Aufgabe erfindungsgemäss dadurch gelöst, dass die Ausziehmittel der zuckerhaltigen Masse aus einem antreibbaren Zentrifugallaufrad bestehen, das in einer Spiralkammer zwischen dem Austritt des Unterdruckkochapparates und einem Austragkanal angeordnet ist.

Weitere Merkmale und Ausbildungen der erfindungsgemässen Ausziehvorrichtung sind dem Kennzeichen der weiteren Ansprüche zu entnehmen.

Obwohl das spezifische Gewicht der im Unterdruckkochapparat behandelten, zuckerhaltigen Masse ca. 1,5 beträgt und sich der Vakuumwert bei den Kochapparaten um 70 cm Hg bzw. um Werte von nahezu 1 bar belaufen und obwohl ferner, dass die Hauptparameter bezüglich der Entnahme der zuckerhaltigen Massen aus minimalen Fördermengen und maximalen Fördehöhen bestehen, hat man erfindungsgemäss ausserordentlich optimale Ergebnisse durch Anwendung, als Verdrängungsmittel der ausgezogenen zuckerhaltigen Masse eines Zentrifugallaufrades bzw einer Kreiselpumpe erreicht d.h. mittels Vorrichtungen, die an und für sich gerade für funktionelle Parameter weltbekannt sind, die gerade den Gegensatz zu den obigen Parametern darstellen, d h. insbesondere für sehr grosse Fördermengen und sehr niedrige Förderhöhen geeignet sind.

Die vorgeschlagenen Zentrifugallaufräder bzw. -turbinen weisen vorzugsweise eine sehr niedrige Anzahl von Schaufeln auf, wogegen bekannterweise die Laufräder von Zentrifugallaufpumpen für Wasser und auch für zähflüssige Medien eine hohen Anzahl von Schaufeln, z. B. 20 bis 25 Schaufeln besitzen, und zwar mit einer etwa geradlinigen Formgebung derselben.

Vorteilhafterweise wird erfindungsgemäss eine Formgebung der Schaufeln mit einer ausgedehnten Umfangserstreckung und mit einer bogenförmigen Profilierung vorgesehen. Dies ermöglicht, bei Anwendung eines Austrittswinkels, der zweckmässig zwischen 10° und 20°, vorzugsweise mit einem Wert von 15°, zu wählen ist, eine langsame Verdrängung der zuckerhaltigen Masse sowie deren Austragung unter einem niedrigen Druck zu erreichen.

Überraschenderweise wurde ebenfalls festgestellt, dass bei so ausgebildeten Kreiselpumpen, und zwar im betrachteten Fall mit nur zwei Schaufeln und bei praktisch gleichbleibender Drehzahl, eine sehr "elastische" Austragung erreicht werden kann, und zwar zwischen einer maximalen Fördermenge von beispielsweise von 2000 kg/h und einer minimalen Fördermenge von 200 kg/h, in Abhängigkeit vom Öffnungsquerschnitt der Austragsöffnung der betreffenden Pumpe. Diese Einstellung erfolgt vorzugsweise mit Hilfe eines sehr einfachen Absperrventils mit einstellbaren Hub od. dgl.

Mit der erfindungsgemässen Ausziehvorrichtung werden ferner zahlreiche Vorteile erreicht deren wichtigste nachstehend aufgeführt sind:

- Aufbau ist sehr einfach und die Anzahl der Bestandteile ist äusserst niedrig, wodurch ohne weiteres denkbar wäre, eine zweite Ausziehvorrichtung als Ersatzteil im Lager deshalb zu halten, weil ihr Anschaffungspreis relativ niedrig im Vergleich zu den durch eine etwaige Ausserbetriebsetzung der Bonbonerzeugungsanlage entstanden Kosten ist.

- Der Platzbedarf der erfindungsgemässen Ausziehvorrichtung ist sehr beschränkt und der Installationsraumbedarf ist ebenfalls sehr klein, was sich sehr günstig bei der Aufstellung der Ausziehvorrichtung in der jeweiligen Anlage auswirkt. Dadurch wird die Verdrängungsstrecke der zuckerhaltigen Masse vom Unterdruckkochapparat bis zu der in Strömungsrichtung nachgeschalteten Bonbonerzeugungsmaschine stark reduziert.

- Die Ausziehvorrichtung und ihr Drehungsantriebs und Drehzahlregelungsaggregat bilden zusammen eine selbständige Einheit, die eine sehr leichte und schnelle Montage in der betreffenden Anlage ermöglicht.

- Die Zeit zum Ersetzen bzw. Warten der Turbine ist sehr kurz und liegt in der Grössenordnung von ca. 20 min.

- Die Bauweise ist sehr einfach, und erlaubt ebenfalls einen nachträglichen Einsatz in schon bestehenden Kochapparaten.

- Eine konstruktive Vereinfachung der Heizzwischenräume und der Einbau eines Spülkreislaufes zur inneren Reinigung der Ausziehvorrichtung nach Beendigung der Tagesarbeit wird ermöglicht.

- Eine zusätzliche Einführungsöffnung zum Einführen von aromatischen Stoffen, Farbstoffen und ähnlichem in die zuckerhaltige Masse vor der Austragung derselben steht zur Verfügung.

Weitere Merkmale Vorteile und Einzelheiten der erfindungsgemässen Ausziehvorrichtung sind der nachfolgenden Beschreibung unter Bezugnahme auf die beiligenden Zeichnungen entnehmbar, die rein schematisch eine bevorzugte Ausführungsform der erfindungsgemässen Ausziehvorrichtung darstellen.

Es zeigen:

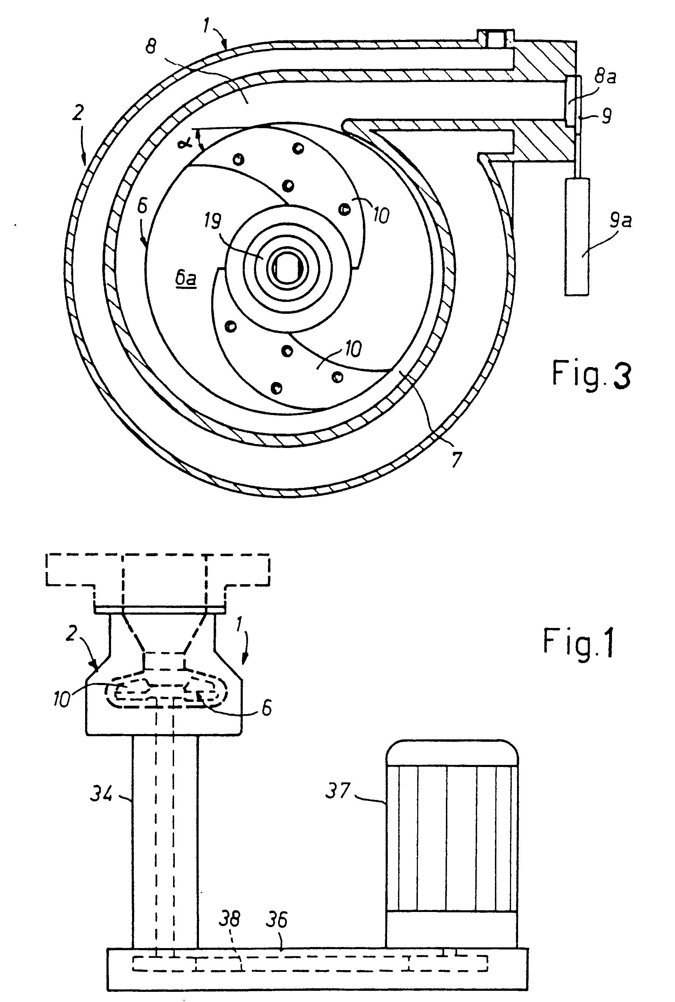

Fig. 1 eine Gesamtprinzipdarstellung der erfindungsgemässen Ausziehvorrichtung;

Fig. 2 den oberen Teil der erfindungsgemässen Ausziehvorrichtung mit einer Kreiselpumpe, in vergrössertem Maßstab, und zwar in einem Querschnitt nach einer vertikalen, mittleren Schnittlinie;

Fig. 3 einen Querschnitt durch die Ausziehvorrichtung etwa nach der Schnittlinie III - III von Fig. 2, die es ermöglicht, das in der Spiralkammer angeordnete erfindungsgemässe Laufrad zu sehen.

In den oben genannten Figuren, bei welchen einander entsprechende Teile mit gleichen Bezugzeichen versehen sind, ist die erfindungsgemäss vorgeschlagene Ausziehvorrichtung insgesamt mit 1 bezeichnet

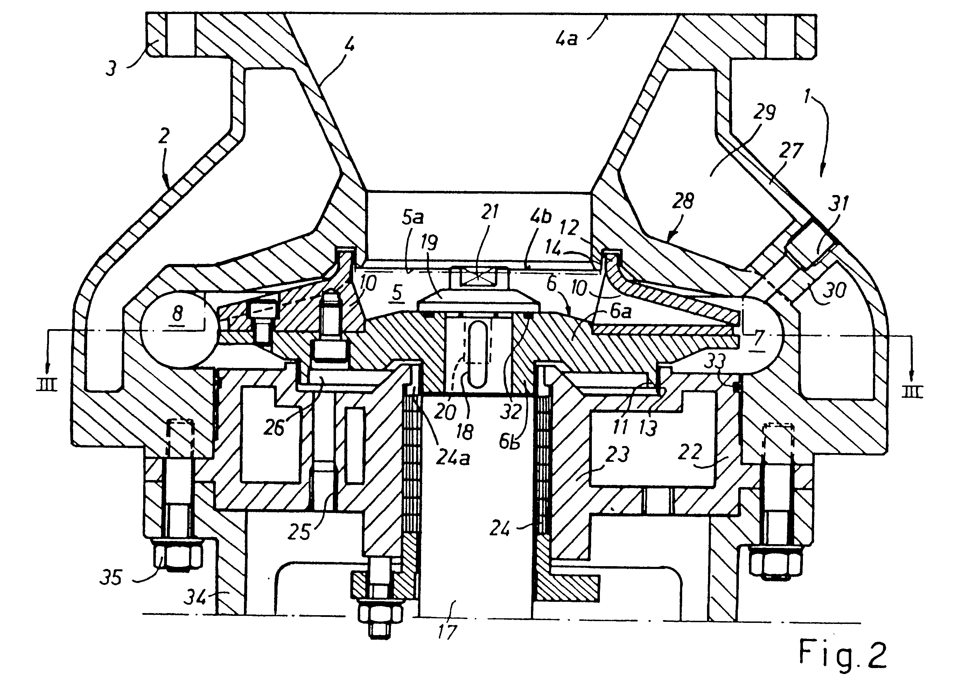

Die Ausziehvorrichtung 1 enthält ein Gehäuse 2 mit einem oben angeordneten Flansch 3, der mit der unteren Seite eines schematisch mit Strichlinien dargestellten und zum Kochen von zuckerhaltigen Massen für Bonbons und dgl. unter Vakuum vorgesehenen Kochapparates durch Verschraubung verbunden ist. Mit 4 ist ein innerer Trichter bezeichnet der mit seiner oberen Öffnung 4a im montierten Zustand mit der Auslassöffnung eines nicht dargestellten Unterdruckkochapparates in Verbindung steht und mit seiner unteren Öffnung 4b in die Einlauföffnung 5a einer Spiralkammer 5 mündet, wobei diese letztere das Laufrad 6 aufnimmt und den spiralförmigen Umfangskanal 7 gestaltet, der seinerseits den tangentialen Produkt-Austragkanal 8 bildet, dessen Öffnung 8a direkt mit der Einlauföffnung der in Strömungsrichtung nahgeschalteten und nicht näher dargestellten Bonbonherstellungsmaschine verbunden ist. Die genannten Austragkanalöffnung 8a ist durch ein Schieberventil 9 über eine geeignete Steuerungsvorrichtung 9a absperrbar bzw steeurbar. Im dargestellten Ausführungsbeispiel besteht das Laufrad 6 aus einem Scheibenelement 6a das auf seiner dem Trichter 4 zugewandten Seite eine beschränkte Anzahl Schaufeln 10 trägt, wobei im gezeigten Beispiel zwei Schaufeln vorhanden sind. Wie aus dem Querschnitt in Fig. 3 hervorgeht weisen die Schaufeln 10 eine beträchtliche Umfangserstreckung, die zweckmässigerweise gewölbt ist, sowie eine Ausbildung von zwei schiefen Ebenen auf, die im Querschnitt sowohl in radialer Richtung hin wie auch in Umfangsrichtung hin geneigt bzw. abnehmend ausgeführt ist. Wie aus Fig. 2 entnehmbar, besitzt sowohl die Unterseite des Scheibenelements 6a wie auch Oberseite der Schaufeln 10 jeweils einen vorspringenden Profilteil 11 bzw. 12, die in einem entsprechenden Sitz 13 bzw. 14 aufgenommen ist.

Die Antriebswelle des Laufrades 6 ist mit 17 bezeichnet, wobei die Befestigung dieser Teile in bekanter Weise, z. B. durch eine Keilverbindung 18 verwirklicht wird. Mit dem Bezugzeichen 19 ist eine Positionierscheibe bezeichnet, welche eine Spindel 20, die in einer entsprechenden Gewindebohrung am Ende dar Welle 17 aufgenommen wird, sowie einen Aufnahmesitz 21 für einen Schraubenschlüssel aufweist. Das Gehäuse 2 besitzt ein Unterteil bzw. Grundteil 22, an welchem der erwähnte Sitz 13 angebracht ist, wobei der Sitz 13 eine Hülse 23 hat, die bei der Montage nach vorheriger Zwischenschaltung einer Hülsendichtung 24, die an sich bekannt und deshalb nicht näher gezeichnet ist, auf das Wellenende der Welle 17 aufgeschoben wird. Mit 25 ist ein Anschluss bezeichnet, der mit einer Quelle eines Reinigungsmittels, z. B. Wasser, verbindbar ist und in die Kammer 26 mündet, welche zwischen der Unterseite des Laufrades und dem erwähnten Grundteil 22 gebildet ist. Eine zwischen der Hülse 23 und der Nabe 6a des Laufrades 6 angeordnete Dichtung ist mit dem Bezugzeichen 24 bezeichnet.

Zwischen der äusseren Wand 27 des Gehäuses 2 und dem Trichter 4 bzw. der Verlängerung desselben, die allgemein mit 28 bezeichnet ist und den Pumpengehäuse-Oberteil des Laufrades bildet, ist ein Zwischenraum 29 vorgesehen, der als Aufnahmekammer für ein Heizmittel, vorzugsweise Dampf, dient und mit nicht näher dargelegten Einlauf- und Auslaufanschlüssen versehen ist.

Aus Fig. 2 ist ausserdem zu ersehen, dass zwischen der Aussenwand 27 und dem Gehäuseteil 28 ein Anschlussblock 30 vorgesehen ist, der in seinem Inneren einen durchgehenden Anschluss 31 aufweist, durch welchen es möglich ist, in den Umfangskanal 7 wahlweise aromatische Stoffe, Farbstoffe u. dgl., oder, nach Beendigung des jeweils vorgesehen Bearbeitungsvorganges, ein Spülmittel z. B. Wasser, einzuführen. Mit 32 und 33 sind Dichtringe, vorzugsweise O-Ringe, bezeichniet.

Das Gehäuse 2 der erfindungsgemässen Ausziehvorrichtung ist auf dem oberen Ende einer Tragsäule 34, z. B. durch Schrauben 5, abgestützt, wobei diese Tragsäule die Antriebswelle 17 sowie, die zugehörigen Rollenlager, Schmierteile u. dgl. aufnimmt und ihrerseits auf einer Grundplatte 36 befestigt ist, die auch das Antriebsmotorgetriebe 37 trägt. Mit 38 wird ein Triebwerk bezeichnet, das einerseits die Antriebsscheibe des genannten Antriebsmotorgetriebes 37 und andererseits die Antriebswelle 17 miteinander verbindet.

Der Einfachheit halber wurde eine nähere Beschreibung der Heiz- und Spülkreisläufe deshalb weggelassen, weil diese Kreislaufe ohne weiteres von einem Fachmann beliebig ausgefürt werden können.

Die Arbeitsweise der vorgeschlagenen Ausziehvorrichtung geht aus der vorhergehenden strukturellen Beschreibung leicht hervor. Die vom Unterdruckkochapparat herkommende zuckerhaltige Masse gelangt durch Schwerkraft in die das Laufrad 6 enthaltende Kammer 5 und von dort bis zur Öffnung 8a, die im voraus durch das Schieberventil 9 geschlossen wurde.

Nun wird die Öffnung 8a geöffnet und die Drehung des Laufrades 6 führt zur Entnahme bzw. Weiterleitung der zuckerhaltigen Masse unter einem leichten Überdruck wobei zu diesem Zweck ein Austrittswinkel α vorzugsweise von 15°, und eine bogenförmige Profilierung der Schaufeln 10, wie dargestellt, gewählt, werden.

Eine Änderung der Fördermenge, beispielsweise von 2000, bis 200 kg/h, lässt sich leicht erreichen, indem der Querschnitt der Austrittsöffnung 8 bei wesentlich gleichbleibender Drehzahl entsprechend geregelt wird. Aus dem Vorstehenden geht deutlich hervor, dass die der vorliegenden Erfindung zugrunde liegende Aufgabe durch die vorgeschlagene Vorrichtung wirksam gelöst und die eingangs erwähnten Vorteile erreicht werden.

In der Praxis ist es leicht möglich, Änderungen bzw. Abwandlungen vorzunehmen, z. B. die Ausbildung der Schaufeln bzw. deren Anzahl abzuändern, sowie weitere geometrische Ausbildungen der vorgeschlagenen Vorrichtung vorzusehen, ohne dadurch den Rahmen der vorliegenden Erfindung, zu verlassen, Abmessungen und Werkstoffe können frei gewählt werden.

Alle der Beschreibung, den Ansprüchen und den Zeichnungen entnehmbaren Merkmale sind sowohl einzeln als auch in beliebiger Kombination miteinander als erfindungswesentlich zu betrachten.


**Patentansprüche**

1. Ausziehvorrichtung zur Entnahme einer zuckerhaltigen Masse aus einem unter Vakuum arbeitenden Kochapparat, mit einem Gehäuse, das mit der Auslassöffnung des Unterdruckkochapparates verbindbar ist und Ausziehmittel der zuckerhaltigen Masse aufnimmt und mit einem äusseren Zwischenraum versehen ist, der einer Quelle eines Heizungsmittels zugeordnet ist, dadurch gekennzeichnet, dass die Ausziehmittel der zuckerhaltigen Masse aus einem antreibbaren Zentrifugallaufrad (6) bestehen, das in einer Spiralkammer (5) zwischen dem Austritt (4b) des Unterdruckkochapparates und einem Auflaufkanal (8) angeordnet ist.

2. Ausziehvorrichtung nach Anspruch 1, dadurch gekennzeichnet, dass das Zentrifugallaufrad (6) eine niedrige Anzahl Schaufeln (10) besitzt, wobei diese Schaufeln (10) eine wesentliche Umfangserstreckung mit einer bogenförmigen Formgebung aufweisen.

3. Ausziehvorrichtung nach Anspruch 1 und 2, dadurch gekennzeichnet, dass das Zentrifugallaufrad (6) zwei Schaufeln (10) aufweist.

4. Ausziehvorrichtung nach den vorherigen Ansprüchen, dadurch gekennzeichnet, dass die Schaufeln (10) des Laufrades (6) eine Ausbildung von zwei schiefen Ebenen aufweist, die im Querschnitt sowohl nach aussen in Radialrichtung hin wie auch seitlich zur Umfangsrichtung bzw. Drehungsrichtung hin geneigt, d.h. abnehmend ausgeführt ist.

5. Ausziehvorrichtung nach den vorhergehenden Ansprüchen, dadurch gekennzeichnet, dass der Austrittswinkel (α) der gebogenen Schaufeln (10) einen Wert zwischen 10° und 20°, vorzugsweise von 15° aufweist.

6. Ausziehvorrichtung nach den vorhergehenden Ansprüchen, dadurch gekennzeichnet, dass sowohl das Laufrad (6) auf seiner schaufelfreien Seite, wie auch die Schaufeln (10) auf ihrer dem Laufrad (6) abgewandten Seite jeweils einen vorspringenden Profilteil (11; 12) aufweisen und die vorspringenden Profilteile (11; 12) in entsprechenden Sitzen (13; 14) im Gehäuse (2) der Ausziehvorrichtung aufgenommen sind.

7. Ausziehvorrichtung nach einem oder mehreren der vorhergehenden Ansprüche, dadurch gekennzeichnet, dass das Gehäuse (2) des Zentrifugallaufrades (6) ein Bestandteil der Ausziehvorrichtung ist und auf seiner Seite, die der schaufelfreien Seite des Laufrades (6) zugewandt ist, eine Reinigungskammer (26) sowie eine Lagerhülse (23) begrenzt, welche der Laufradantriebswelle (12) zugeordnet und fähig ist, zusammen mit dieser letzteren Aufnahmeräume für Abdichtungen (24, 24a) zu bilden.

8. Ausziehvorrichtung nach einem oder mehreren der vorhergehenden Ansprüche dadurch gekennzeichnet dass eine Anschlussbohrung (31) in die das Zentrifugallaufrad (6) aufnehmende Kammer (5) mündet und der beliebigen Einführung in der letzteren von Spülmitteln oder aromatischen Stoffen, Farbstoffen u. dgl. dient, die in der erwähnten Kammer (5) der zuckerhaltigen Masse vor ihrer Austragung zuzusetzen sind.

9. Ausziehvorrichtung nach einem oder mehreren dem vorhergehenden Ansprüche, dadurch gekennzeichnet, dass die Ausziehvorrichtung (1) zusammen mit ihren Antriebsmitteln (17, 35, 38, 37) eine selbständige Einheit bildet.


**Claims**

1. Apparatus for drawing off a sugar-containing mass from a vacuum cooker, comprising a casing which is adapted to be connected to the outlet aperture of the vacuum cooker, and which holds means for drawing off the sugar-containing mass and is provided with an external interspace associated with a heating medium source, characterized in that the means for drawing off the sugar-containing mass consists of a drivable centrifugal rotor (6) which is disposed in a spiral chamber (5) between the outlet (4b) of the vacuum cooker and a discharge duct (8).

2. Draw-off apparatus according to Claim 1, characterized in that the centrifugal rotor (6) has a small number of blades (10), these blades (10) having a substantial extent of periphery with a curved shape.

3. Draw-off apparatus according to Claims 1 and 2, characterized in that the centrifugal rotor (6) has two blades (10).

4. Draw-off apparatus according to the preceding claims, characterized in that the blades (10) of the rotor (6) are shaped with two inclined planes which in cross-section are inclined, that is to say decrease, both outwards in the radial direction and laterally to the peripheral direction or direction of rotation.

5. Draw-off apparatus according to the preceding claims, characterized in that the outlet angle (a) of the curved blades (10) has a value between 10° and 20°, preferably of 15°.

6. Draw-off apparatus according to the preceding claims, characterized in that both the rotor (6), on its side free from blades, and the blades (10), on their side remote from the rotor 6, are in each case provided with a projecting profiled portion (11; 12), and that the projecting profiled portions (11; 12) are received in corresponding seats (13; 14) in the casing (2) of the draw-off apparatus.

7. Draw-off apparatus according to one or more of the preceding claims, characterized in that the casing (2) of the centrifugal rotor (6) is a component of the draw-off apparatus and delimits on one side, which faces the side of the rotor (6) on which there are no blades, a cleaning chamber (26) and a bearing bush (23) which is associated with the rotor drive shaft (12) and is adapted to form, in conjunction with the latter, spaces to receive seals (24, 24a).

8. Draw-off apparatus according to one or more of the preceding claims, characterized in that a connection bore (31) leads into the chamber (5) containing the centrifugal rotor (6) and serves for the selective introduction into said chamber of flushing media or aromatic substances, colorants or the like which are to be added in said chamber (5) to the sugar-containing mass before its discharge.

9. Draw-off apparatus according to one or more of the preceding claims, characterized in that the draw-off apparatus (1) forms an independent unit together with its drive means (17, 35, 38, 37).

**Revendications**

1. Organe de vidange du masse à base du sucre en sortie d'un cuiseur sous vide, avec un logement qui peut être relié à l'ouverture de sortie du cuiseur à dépression et reçoit des moyens de vidange de la masse à base de sucre et est pourvu d'une chambre intermédiaire externe, où est affectée une source d'un moyen chauffant, caractérisé en ce que les moyens de vidange de la masse à vase de sucre se composent d'une roue mobile centrifuge (6) pouvant être entraînée, qui est disposée dans une chambre en spirale (5) entre la sortie (4b) du cuiseur à dépression et un canal d'entrée (8).

2. Organe de vidange selon le revendication 1, caractérisé en ce que la roue mobile centrifuge (6) possède un faible nombre d'aubes (10), ces aubes (10) présentant une étendue fondamentalement périphérique avec un façonnage arqué.

3. Organe de vidange selon la revendication 1 et 2, caractérisé en ce que la roue mobile centrifuge (6) présente deux aubes (10).

4. Organe de vidange selon l'une quelconque des revendications précédentes, caractérisé en ce que les aubes (10) de la roue mobile (6) présentent une configuration de deux plans inclinés qui est réalisée inclinée en section transversale aussi bien vers l'extérieur en direction radiale qu'également latéralement à la direction périphérique ou respectivement direction de rotation, c'est-à-dire en diminuant.

5. Organe de vidange selon l'une quelconque des revendications précédentes, caractérisé en ce que l'angle de sortie $(\alpha)$ des aubes arquées (10) présente une valeur comprise entre 10° et 20°, avantageusement de 15°.

6. Organe de vidange selon l'une quelconque des revendications précédentes, caractérisé en ce qu'aussi bien la roue mobile (6) de son côté sans aube qu'également les aubes (10) de leur côté éloigné de la roue mobile (6) présentent une pièce profilée en saillie (11; 12) et les pièces profilées en saillie (11; 12) sont reçues dans des sièges correspondants (13; 14) du logenent (2) de l'organe de vidange.

7. Organe de vidange selon l'une quelconque des revendications précédentes, caractérisé en ce que le logement (2) de la roue mobile centrifuge (6) est une partie constituante de l'organe de vidange et de son côté qui est tourné vers le côté sans aube de la roue mobile (6), délimite une chambre de nettoyage (26) ainsi qu'une douille d'appui (23) qui est affectée à l'arbre d'entraînement (12) de la roue mobile et est capable de former, avec ce dernier, des espaces de réception pour des étanchéités (24, 24a).

8. Organe de vidange selon l'une quelconque des revendications précédentes, caractérisé en ce qu'un perçage de raccordement (31) débouche dans la chambre (5) recevant la roue mobile centrifuge (6) et sert à l'introduction facultative, dans celle-ci, de fluides de rinçage ou matières aromatiques, colorants et analogues qui sont adjoints, dans la chambre mentionnée (5), à la masse à base de sucre, avant sa sortie.

9. Organe de vidange selon l'une quelconque des revendications précédentes, caractérisé en ce que l'organe de vidange (1) forme, avec ses moyens d'entraînement (17, 35, 38, 37), une unité autonome.

Fig.3

Fig.1

Fig. 2